(19) Europäisches Patentamt
European Patent Office
Office européen des brevets

(11) **EP 3 478 426 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(51) Int Cl.:
**B21D 5/04** *(2006.01)*   **B21D 53/88** *(2006.01)*

(21) Anmeldenummer: **17728543.4**

(22) Anmeldetag: **08.06.2017**

(86) Internationale Anmeldenummer:
**PCT/EP2017/063897**

(87) Internationale Veröffentlichungsnummer:
**WO 2018/001692 (04.01.2018 Gazette 2018/01)**

(54) **VERFAHREN ZUR HERSTELLUNG VON ZIERLEISTEN UND UNTER VERWENDUNG DES VERFAHRENS HERGESTELLTE ZIERLEISTEN**

METHOD FOR PRODUCING TRIM STRIPS AND TRIM STRIPS PRODUCED USING SAID METHOD

PROCÉDÉ DE FABRICATION DE BAGUETTES ENJOLIVEUSES ET BAGUETTES ENJOLIVEUSES FABRIQUÉES EN UTILISANT LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2016 CH 8392016**

(43) Veröffentlichungstag der Anmeldung:
**08.05.2019 Patentblatt 2019/19**

(73) Patentinhaber: **Adval Tech Holding AG 3172 Niederwangen (CH)**

(72) Erfinder: **SCHNEIDER, Eckhard 79361 Sasbach-Leiselheim (DE)**

(74) Vertreter: **Bremi, Tobias Hans Isler & Pedrazzini AG Giesshübelstrasse 45 Postfach 1772 8027 Zürich (CH)**

(56) Entgegenhaltungen:
**DE-A1-102010 017 996   DE-A1-102014 108 726 JP-A- S5 994 529   US-A1- 2014 047 889**

**Beschreibung**

TECHNISCHES GEBIET

Die vorliegende Erfindung betrifft ein Verfahren zur Herstellung von spezifisch ausgeformten Zierleisten, insbesondere zur Verwendung im Automobilbereich, sowie unter Verwendung des Verfahrens hergestellte Zierleisten.

STAND DER TECHNIK

Sogenannte "Zierleisten" aus Metall werden an verschiedenen Stellen im Fahrzeug in verschiedenen Ausführungsformen verwendet. Sie können aus Kunststoff oder aus Metall bestehen, und dienen dazu, Übergangsbereiche von verschiedenen Abschnitten sowohl in ästhetischer Hinsicht als auch in technischer Hinsicht (Dichtung, Schutz vor eindringen von Schmutz, aerodynamische Ausgestaltung) zu optimieren. Solche Zierleisten überbrücken beispielsweise bei einer Tür eines Fahrzeugs den Bereich zwischen eigentlicher Metall-Karosserie und Fenster, und können als Strangprofil ausgebildet sein oder als Blechabschnitt, der entsprechend zugeschnitten und umgeformt wird.

Wichtig bei derartigen Zierleisten sind insbesondere jene End-Abschnitte, bei welchen entsprechende Bereiche zwischen beweglichen Teilen angepasst vorgesehen sein müssen. Mit anderen Worten sind die Übergänge wichtig, bei welchen die im Wesentlichen angrenzenden horizontal verlaufenden Zierleisten an den vertikal verlaufenden Kanten der Türen ausgebildet sein sollen. Das entsprechende Blech kann an dieser Stelle nicht einfach zugeschnitten sein, sondern an diesen Stellen müssen entweder Endkappen angeordnet werden, oder der entsprechende Blechabschnitt muss umgebogen werden. Dabei entstehen in der Regel vergleichsweise grosse Biegeradien, was für die gewünschten Spaltmasse im Automobilbereich sowohl in ästhetischer als auch in technischer Hinsicht nachteilig ist. In diesen Bereichen ist zudem, wenn ein niedriges Spaltmass gefordert wird, eine hohe Präzision erforderlich. Dies weil beispielsweise bei Schwenktüren der umgebogene Bereich optimal angepasst sein muss, so ist beispielsweise auf der Öffnungsseite einer Tür der Winkel zwischen der Hauptverlaufsrichtung der Zierleiste und dem umgebogenen Bereich bei einer horizontal verlaufenden Zierleiste nicht notwendigerweise in einem rechten Winkel auszubilden, und der korrespondierende Winkel der am stationären Karosserieteil angeordneten Zierleiste muss exakt angepasst ausgebildet sein.

Aus der DE-A-102014108726 ist ein Verfahren zur Herstellung einer Funktions- oder Zierleiste bekannt, wobei die entstehende Leiste aus einem längsverlaufenden Abschnitt und mindestens einem abgebogenen Endabschnitt besteht. Das Verfahren dient insbesondere der Formgebung des Leistenendes, indem nach dem Abbiegen der Leiste in einem nachfolgenden Verfahrensschritt im Abkantbereich der Leiste ein Verschieben von plastisch verformbaren Metallmaterial vorgenommen wird, wodurch ein kleiner Aussenradius zwischen Endabschnitt und dem längsverlaufenden Abschnitt erzielt wird. Dabei wird so vorgegangen, dass nach dem eigentlichen Umlegen des Randes durch einen in die Hohlkehle des umgelegten Bereiches von innen eingreifenden Stempel das Material im umgebogenen Bereich nach aussen verschoben wird, um einen engeren Radius auf der Aussenseite zu erhalten.

DARSTELLUNG DER ERFINDUNG

Es ist entsprechend unter anderem Aufgabe der vorliegenden Erfindung, ein verbessertes Verfahren zur Herstellung einer Zierleiste bereitzustellen, insbesondere zur Herstellung einer Zierleiste für den Automobilbereich.

Die vorliegende Erfindung betrifft entsprechend ein Verfahren zur Herstellung einer Zierleiste, wobei diese Zierleiste entlang ihrer Verlaufsrichtung eine Länge L aufweist, welche wenigstens doppelt so gross ist wie ihre Breite B senkrecht zur Verlaufsrichtung. Die Zierleiste verfügt zudem über einen Erstreckungsabschnitt entlang ihrer Länge und an wenigstens einem Ende über einen bezüglich Verlaufsrichtung um einen Winkel $\alpha$ im Bereich von 60-120° umgelegten Abschnitt mit einer scharfen Kante. Dieser umgelegten Abschnitt ersetzt eine Endkappe wie sie oben dargestellt wurde, und die Besonderheit dieses umgelegten Abschnittes ist seine scharfe Kante, d.h. ein Übergangsbereich mit niedrigem Radius zwischen der Aussenfläche des umgelegten Abschnittes und der äusseren Oberfläche des Erstreckungsabschnittes. Der Winkel zwischen dem Erstreckungsabschnitt und diesem umgelegten Bereich kann ein spitzer Winkel sein (a im Bereich von kleiner 90°), es kann aber auch ein stumpfer Winkel sein, je nach Anwendung und Einsatzbereich.

Das vorgeschlagene Verfahren umfasst dabei wenigstens folgende Schritte:

i) Vorlegen einer Platine mit einer Materialstärke (Mat) und mit einer vorbereiteten Kontur (vorzugsweise einer vorgehaltenen, d.h. passend und hier vor allem das Rückstauchen sowie aber auch Rückfederung etc. berücksichtigend zugeschnittenen Endkappenkontur), für die Ausbildung des Abschnitts;

ii) Umlegen der vorbereiteten Kontur in einem Biegevorgang, wobei die Platine im Bereich des zukünftigen Erstreckungsabschnitts wenigstens im Endbereich zwischen einer Matrize und einem Niederhalter geklemmt wird und die vorbereitete Kontur durch die Verschiebung eines Stempels zu einem umgelegten Abschnitt mit einer Randkante umgebogen wird;

iii) Ausbilden einer scharfen Kante des umgelegten Abschnitts, wobei wenigstens im Endbereich der Erstreckungsabschnitt zwischen einer ersten Klemmfläche einer Matrize für den Kantenbildungsvorgang und einer zweiten Klemmfläche einer Gegenform geklemmt wird,

wobei die Innenfläche des umgelegten Abschnitts an einer planen oder gekrümmten Seitenfläche der Gegenform anliegt,

wobei eine entsprechende Seitenfläche der Matrize für den Kantenbildungsvorgang in Verlaufsrichtung im Wesentlichen um die Materialstärke (Mat) weiter vorsteht als die Seitenfläche der Gegenform, und wobei die erste Klemmfläche der Matrize im überstehenden Bereich um die Materialstärke entlang der Verlaufsrichtung unter Ausbildung einer scharfen Kante zur Seitenfläche fortgesetzt ist,

und wobei ein Stempel für den Kantenbildungsvorgang mit einer im Wesentlichen um die Materialstärke gestuften (Matrize und Gegenform zugewandten) Seitenfläche derart an den Seitenflächen von Gegenform und Matrize entlang geführt wird, dass die Stufe in der Seitenfläche des Stempels an der Randkante angreift und das Material des umgelegten Abschnitts in den Kantenbereich unter Ausbildung einer scharfen Kante verschiebt.

Gemäss einer ersten bevorzugten Ausführungsform ist das Verfahren dadurch gekennzeichnet, dass die Randkante zwischen dem Schritt ii) und dem Schritt iii) in einem Stanzvorgang und/oder einem Schneidvorgang zugeschnitten wird oder spanabhebend bearbeitet wird. Dabei kann die im Schritt i) vorgelegte Platine in einem Stanzvorgang und/oder Schneidvorgang, einschliesslich Laserschneiden, aus einem flachen Blechstreifen hergestellt werden, und vorzugsweise Bohrungen vorgesehen werden.

Vor dem Schritt i) kann die Platine zusätzlich um eine im Wesentlichen parallel zur Verlaufsrichtung verlaufende Achse abgeknickt und/oder gekrümmt werden unter Ausbildung eines umgebogenen Abschnittes oder eines umgeknickten Abschnittes. Alternativ ist es möglich, dass die in Schritt i) vorgelegte Platine aus einem Strangprofil vorgelegt respektive hergestellt wird, wobei vorzugsweise gegebenenfalls vorhandene Randprofilrippen im Angrenzungsbereich an den umgelegten Abschnitt vorgängig ausgeschnitten werden, und die vorgehaltene Endkappenkontur aus dem häufig bereits parallel zur Verlaufsrichtung gekrümmten Profil geschnitten respektive gestanzt wird. Eine weitere bevorzugte Ausführungsform ist dadurch gekennzeichnet, dass im Schritt ii) der umgelegte Abschnitt um eine Achse senkrecht zur Verlaufsrichtung umgelegt wird. Anschliessend an den Schritt iii) kann gemäss einer weiteren bevorzugten Ausführungsform die Zierleiste einem weiteren Bearbeitungsschritt unterzogen werden. Beispielsweise können derartige weitere Operationen folgendes umfassen: Zuschnitt, Oberflächenbehandlung, einschliesslich Oberflächenbeschichtung, Polieren, Eloxieren, Honen, spanabhebende Oberflächenbehandlung etc.

Anschliessend an den Schritt iii) kann weiter die scharfe Kante der Zierleiste in einem folgenden Prägungsschritt präzisiert werden. Beispielsweise indem die scharfe Kante poliert und/oder geschliffen wird, oder aber insbesondere vorzugsweise indem der Erstreckungsabschnitt der Zierleiste wenigstens im Endbereich zwischen einer ersten Klemmfläche einer Matrize für die Radiusprägung und einer zweiten Klemmfläche eines Niederhalters für die Radiusprägung geklemmt wird, die Randkante des umgelegten Abschnitts in einer Stufe einer Seitenfläche der Matrize für die Radiusprägung abgestützt wird, und von der Seite des Niederhalters ein Stempel für die Radiusprägung mit einer abgerundeten Stufe für den gewünschten Radius für die scharfe Kante umformend auf die scharfe Kante geführt wird.

Die Zierleiste besteht bevorzugter Massen aus Metall, bevorzugt aus Aluminium oder einer Aluminiumlegierung (z.B. A199,9Mg1; A199,7Mg0,8Cu), aus Stahl, vorzugsweise rostfreiem Stahl, Messing, Silber, Titan, Kupfer, oder eine Legierung dieser Materialien. Die Zierleiste verfügt bevorzugter Massen über eine Materialstärke im Bereich von 0.5-2.5 mm, vorzugsweise im Bereich von 0.8-2 mm, insbesondere im Bereich von 1-1.6 mm. Insbesondere bevorzugt werden die Zierleisten aus Halbzeugen mit einer Wandstärke zwischen 1,0mm und 1,6mm gefertigt, bevorzugt aus Aluminiumlegierungen. Aber auch die Herstellung von Zierleisten aus rostfreien Stählen (z.B. 1.4301, 1.4303, 1.4310, 1.4016) oder auch aus Schwarzstahl (z.B. DC01, DC02, DC03, DC04, DC05, DC06, HC220, HC300, HC340, HC420), welcher anschliessend beschichtet wird, ist möglich bzw. ist bereits realisiert worden. Des Weiteren ist die Herstellung solcher Zierleisten aus weiteren metallischen Materialien mit hinreichendem Umformvermögen möglich (z.B. Messing, Silber, Titan, Kupfer).

Die scharfe Kante verfügt bevorzugter Massen über einen Radius von höchstens 2.0 mm, vorzugsweise im Bereich von 0.1-2.0 mm, insbesondere vorzugsweise im Bereich von 0.2-1 mm. Es sind sogar scharfe Kanten mit sehr kleinen Radien von weniger als 0.1 mm oder von sogar 0.0 mm möglich.

Bei einer bestimmten Ausgangsmaterialstärke, vorzugsweise im Bereich von 0.5-2.5 mm, insbesondere vorzugsweise im Bereich von 0.8-2 mm, oder im Bereich von 1-1.6 mm, verfügt vorzugsweise die scharfe Kante über einen Radius von 0.1 - 0.4 mal Ausgangsmaterialstärke, vorzugsweise 0.2-0.3 mal Ausgangsmaterialstärke.

Die Länge (L) der Zierleiste legt insbesondere bevorzugt im Bereich von 5 - 300cm, vorzugsweise 10-150 cm, vorzugsweise im Bereich von 20-100 cm.

Die Breite (B) der Zierleiste legt bevorzugt im Bereich von 0.4-12 cm, vorzugsweise im Bereich von 1-5 oder 1-3 cm.

Die Länge (1) des umgelegten Abschnitts an der längsten Stelle liegt bevorzugter Massen im Bereich von 0.3-5 cm, vorzugsweise im Bereich von 0.5-3 cm.

Weiterhin betrifft die vorliegende Erfindung eine Zierleiste, vorzugsweise hergestellt in einem Verfahren, wie es oben dargestellt ist, dadurch gekennzeichnet, dass die Zierleiste entlang ihrer Verlaufsrichtung eine Länge (L) aufweist, welche wenigstens doppelt so gross ist wie ihre Breite B senkrecht zur Verlaufsrichtung, mit einem Erstreckungsabschnitt und an wenigstens einem Ende einem bezüglich Verlaufsrichtung um einen Winkel α im Bereich von 60-120° umgelegten Abschnitt mit einer scharfen Kante, wobei die Zierleiste aus Metall besteht oder wenigstens im Bereich des umgelegten Abschnitts aus Metall besteht, und wobei die scharfe Kante einen (Aussen)Radius von höchstens 2.0 mm aufweist, vorzugsweise im Bereich von 0.1-2.0 mm, insbesondere vorzugsweise im Bereich von 0.2-1 mm.

Im Zusammenhang mit einer solchen Zierleiste ist folgendes hervorzuheben: eine nach dem vorgeschlagenen Verfahren hergestellte Zierleiste unterscheidet sich von einer Zierleiste, wie sie nach dem Verfahren in der eingangs genannten DE-A-10 2014 108726 erhalten werden kann. Dies aus folgenden Gründen:

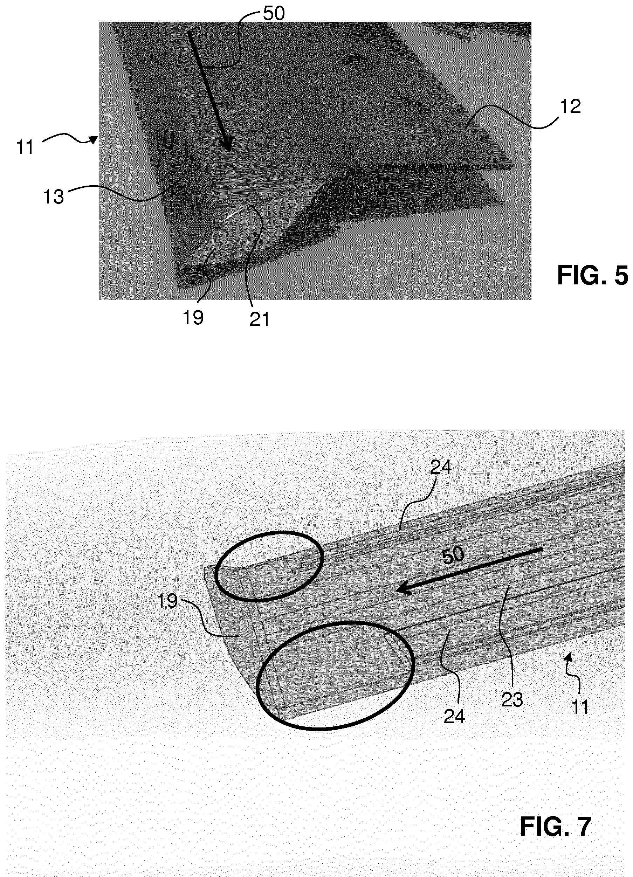

Die erreichbaren Dimensionen des Eckradius sind bei dem Verfahren der DE-A-10 2014 108726 deutlich limitierter als bei uns. In der DE-A-10 2014 108726 ist ausdrücklich in Anspruch 10 erwähnt, dass der Aussenradius einem Innenradius entspricht, welcher beim Abkanten erreichbar ist. Der Radius beim Abkanten kann nicht kleiner sein als die Materialstärke, bei Aluminium ist es oftmals sogar so, dass man - je nach Legierung - einen Faktor 1,5 oder 2 nehmen muss. Die bedeutet weiter, dass mit dem Verfahren nach der DE-A-10 2014 108726 keine Zierleisten herstellbar sind, welche einen Aussenradius haben, der kleiner ist, als die Materialstärke, was auch das Beispiel auf Seite 3 (Absatz 0016) belegt (1mm Wandstärke, 1,4mm Aussenradius). Dies ist beim hier vorgeschlagenen Verfahren anders, da hiermit Aussenradien erreichbar sind, welche deutlich kleiner sind, als die Materialstärke (siehe auch Fig. 5).

Durch das Verfahren nach DE-A-10 2014 108726 wird das Material im Bereich der Aussenkante weiter ausgedünnt, da die Umformung mit Hilfe eines "Reckens" vorgenommen wird, d.h., das Material zur Füllung der Aussenkontour wird durch eine "Verjüngung" der Materialdicke "gewonnen". Beim hier vorgeschlagenen Verfahren wird hingegen Material durch eine Reduktion der Fläche (stauchen) dem Radiusbereich zugeführt, was zu einer Zunahme der Materialdicke in diesem Bereich führt.

Ein weiterer Effekt eines solchen "Reckprozesses" nach der DE-A-10 2014 108726 ist eine Verschlechterung der Oberfläche im Radiusbereich. In Fig. 2 eine Zierleiste nach dem "Abkanten" dargestellt. Im Bereich des Aussenradius ist hier eine Aufrauhung der Oberfläche zu erkennen (Aussen wird das Material durch den Biegevorgang gedehnt). Dieser Effekt wird durch einen Reckvorgang (Dehnung des Materials) nach der DE-A-10 2014 108726 noch weiter verstärkt.

So kann zusammenfassend festgehalten werden, dass mit dem hier vorgeschlagenen Verfahren Zierleisten herstellbar sind, welche sich von denen gemäss DE-A-10 2014 108726 hergestellten bzgl. der folgenden Merkmale unterscheiden:

- Grösse des Aussenradius
- Materialstärke im Radiusbereich
- Oberflächenqualität in diesem Bereich.

So sind nach dem Verfahren nach der DE-A-10 2014 108726 minimale Aussenradien auf 0,5 x Ausgangsmaterialstärke (also ca. 0,5 mm bei 1mm Blechstärke) beschränkt.

Nach dem hier vorgeschlagenen Verfahren können dagegen wesentlich tiefere minimale Aussenradien von bis zu 0.1 x Ausgangsmaterialstärke erreicht werden. So z.B. eine Zierleiste hergestellt in einem Verfahren, wie es oben dargestellt ist, welche dadurch gekennzeichnet ist, dass die scharfe Kante einen Radius im Bereich von 0.1-1 mm aufweist, und/oder dass die Zierleiste aus Metall mit einer Ausgangsmaterialstärke M einen (Aussen)Radius R aufweist, der im Bereich von 0.1-0.4 mal die Ausgangsmaterialstärke beträgt (R im Bereich von 0.1 x M - 0.4 x M), vorzugsweise im Bereich von 0.2-0.3 x Ausgangsmaterialstärke. Es sind also beispielsweise ca. 0,2 mm Aussenradius bei 1mm Blechstärke möglich.

Eine solche Zierleiste ist vorzugsweise spanlos hergestellt.

Eine derartige Zierleiste kann im Automobilbereich, insbesondere im Aussenbereich von Automobilen, Verwendung finden.

Weitere Ausführungsformen sind in den abhängigen Ansprüchen angegeben.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Fig. 1 schematisch in einer Seitenansicht in a) unterschiedliche kritische Stellen bei Zierleisten bei einem Automobil und in b) in einer Heckansicht;

Fig. 2 Schnittdarstellungen durch Zierleisten senkrecht zur Hauptverlaufsrichtung der Zierleiste im Übergangsbereich vom Chassis zu einer Glasscheibe bei einer Tür, wobei in a) eine Zierleiste mit gekrümmten Profil dargestellt ist, in b) eine ebene Zierleiste, und in c) eine Zierleiste in Winkelblechform;

Fig. 3 in a) ein konventionelles Werkzeug zum Umlegen eines Randabschnittes und in b) eine Darstellung eines unter Verwendung eines derartigen Werkzeugs hergestellten umgelegten Bereichs;

Fig. 4 in a) ein mit einem konventionellen Werkzeug umgelegter Randabschnitt von unten, der spanend nachbearbeitet ist, wobei oben links eine entsprechende Schnittdarstellung angegeben ist, und in b) ein mit einem konventionellen Werkzeug umgelegter Randabschnitt, der spanend nachbearbeitet ist, von oben;

Fig. 5 ein nach dem erfindungsgemässen Verfahren hergestellter umgelegter Randabschnitt von oben;

Fig. 6 verschiedene Verfahrensabschnitte bei der Herstellung eines umgelegten Randabschnittes, wobei in

a) auf der linken Seite der plane zugeschnittene Rohling (Platine) in einer Aufsicht und auf der rechten Seite in einer perspektivischen Ansicht dargestellt ist;

b) auf der linken Seite der im Randbereich gekrümmt ausgebildete Zwischenschritt in einer Aufsicht und auf der rechten Seite in einer perspektivischen Ansicht dargestellt ist;

c) auf der linken Seite das Werkzeug zum Umlegen des Bereichs 19 und auf der rechten Seite in einer perspektivischen Ansicht die damit hergestellte Zierleiste dargestellt ist;

d) auf der linken Seite schematisch dargestellt ist, wie der ungelegte Bereich beschnitten werden kann;

e) auf der linken Seite das Werkzeug zur Ausformung der scharfen Kante und auf der rechten Seite in einer perspektivischen Ansicht die damit hergestellte Zierleiste dargestellt ist;

f) auf der linken Seite das Werkzeug zur zusätzlichen Prägung der erzeugten Kante dargestellt ist; und

Fig. 7 eine Zierleiste hergestellt ausgehend von einem Strangprofil in einer perspektivischen Ansicht.

## BESCHREIBUNG BEVORZUGTER AUSFÜHRUNGSFORMEN

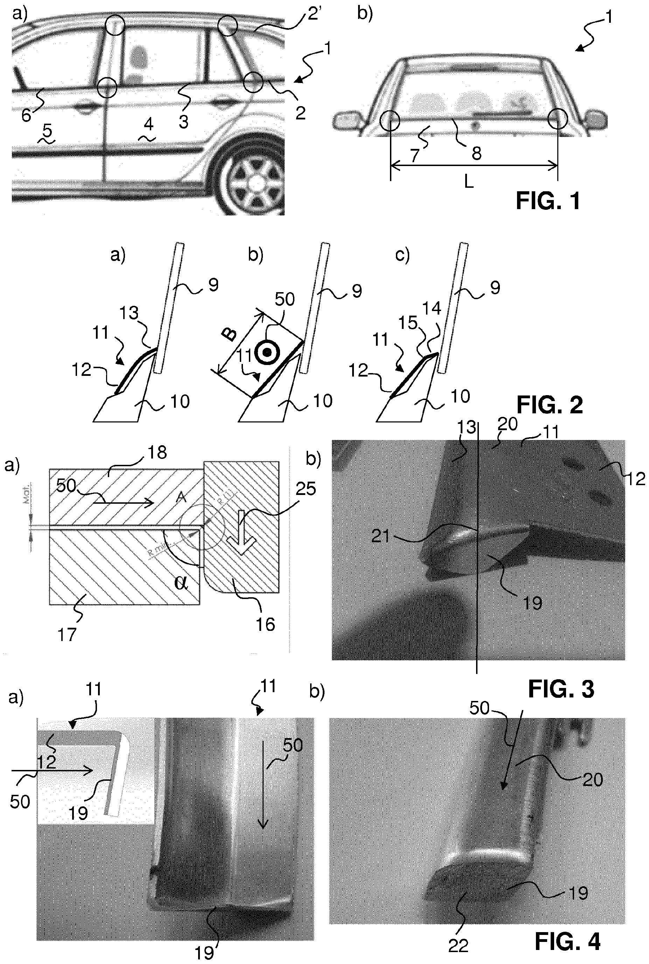

In Fig. 1 sind mögliche Einsatzbereiche einer erfindungsgemässen Zierleiste 11 im Fahrzeug 1 dargestellt. Es ist zu erkennen, dass die Zierleisten nicht gerade sein müssen, sondern der Kontur des zu verzierenden Bereichs (z.B. Fenster) entsprechen. Von besonderem Interesse sind dabei die mit Kreisen bezeichneten Bereiche. So insbesondere jener Bereich in Figur la, einer Seitenansicht, wo die untere Zierleiste 6 an der vorderen Tür 5 angrenzt an die untere Zierleiste 3 an der hinteren Tür 4. Um hier ein geringes Spaltmass bei scharfen Kanten zu erreichen muss ein umgelegter Bereich 19 eine hohe Präzision aufweisen. Analoge Bereiche sind im Dachbereich bezeichnet, und auch im hinteren Bereich sind solche Zierleisten als untere Zierleisten 2 und obere Zierleisten 2' am stationären Bereich häufig vorgesehen, wobei diese als Einzelstücke oder auch als wenigstens teilweise umlaufende zusammenhängende Rahmenteile (z.B. zusammenhängendes "U") ausgebildet sein können. Auch hier ist insbesondere der Übergang zwischen der bewegten Tür 4 und dem stationären Bereich entscheidend. Analoge kritische Bereiche ergeben sich im Heckbereich, bei der Heckklappe, wie dies in Figur 1b dargestellt ist. Derartige Zierleisten, hier die untere Zierleiste 8 an der Heckklappe 7, kann eine erhebliche Länge L aufweisen, eine Zierleiste hat in der Regel eine grössere Länge L als ihre Breite senkrecht zu dieser Hauptverlaufsrichtung ist.

Es wird bei den Zierleisten 11 zwischen verschiedenen möglichen Profilen in einer Schnittdarstellung senkrecht zur Hauptverlaufsrichtung 50 gesprochen. Die meist verwendeten Profilmöglichkeiten sind in Figur 2 schematisch dargestellt. Eine derartige Zierleiste 11 überbrückt in der Regel beispielsweise bei einer Situation wie beim Bezugszeichen 3 in Figur 1a dargestellt den Übergang von einer Karosserie-Unterkonstruktion 10 zu einer Glasscheibe 9. Die Zierleiste 11 überbrückt diesen Randbereich und überdeckt dabei Funktionsbauteile, die in diesem Randbereich angeordnet sind, wenigstens teilweise, so beispielsweise Dichtungen, Dichtlippen, etc. Eine 1. Möglichkeit ist in Figur 2a dargestellt, hier ist die Zierleiste 11 in einem ersten Bereich 12 plan ausgebildet, und geht dann in einen gekrümmten Bereich 13 über. Es ist auch möglich, dass es gar keinen planen Bereich 12 gibt, und die gesamte Zierleiste 11 in einem Schnitt senkrecht zur Hauptverlaufsrichtung 50 gekrümmt ist. Ebenfalls ist es möglich, wie dies in Figur 2b dargestellt ist, dass eine derartige Zierleiste vollständig plan ist in einer Schnittdarstellung, und weiterhin möglich ist es, dass die Zierleiste, wie in Figur c dargestellt, einen ersten planen Bereich 12 aufweist, der über einen Knick 15 in einen zweiten planen Bereich 14 übergeht (so genannte "Winkelblechform", der zwischen den beiden Abschnitten eingeschlossene Winkel liegt in der Regel im Bereich von 120-170°). Da derartige Zierleisten in der Regel aus Metall in einem Biegeprozess oder in einem allgemeinen Stanz- und Umformprozess hergestellt werden, ist aber auch ein derartiger Knick normalerweise keine wirklich scharfe Kante, sondern eine Krümmung.

In der Regel werden aktuell die Enden der Zierleisten mit Hilfe von Kunststoffelementen abgeschlossen oder die Enden dieser Zierleisten werden umgebogen, und zwar typischerweise unter Verwendung einer Vorrichtung, wie sie in Figur 3a dargestellt ist, um einen Abschluss zu erreichen. Dabei wird wenigstens der Endbereich des Erstreckungsabschnitts 20 der Zierleiste 11 zwischen einer Matrizen 17 für den Biegevorgang und einem Niederhalter 18 für den Biegevorgang geklemmt. Der umzulegende Bereich steht über diese beiden Elemente hervor und wird anschliessend durch den Stempel 16 für den Biegevorgang, der entlang der Verschiebungsrichtung 25 an der Seitenkante der Elemente 17 und 18 verschoben wird, umgelegt. Dabei entsteht ein Winkel zwischen der Hauptverlaufsrichtung 50 der Zierleiste und der Verlaufsrichtung des umgelegten Bereichs, wie er mit α in der Figur dargestellt ist.

In diesem Fall entsteht ein sogenannter Biegeradius (vergleiche Figur 3b), bei dem eine bestimmte Mindestgrösse aktuell nicht unterschritten werden kann. Dieser kleinstmögliche Aussenradius R1 kann mit Hilfe der folgenden Formel zumindest näherungsweise abgeschätzt werden:

$$R1 = Rmin + \text{Materialstärke} \qquad (1)$$

Rmin: Konstante, welche vom Material und der Materialstärke abhängig ist.

Diese Mindestgrösse wird durch die verwendete Materialstärke (typischerweise 1,2mm) und das Material (typischerweise Aluminium) selbst limitiert und ist für die genannte Kombination (1,2 mm Aluminium) typischerweise grösser 2,8 mm. Je nach Form der Zierleiste ist es in der Regel so, dass dieser Radius nach dem Biegen nicht gleichmässig ausgebildet ist (vergleiche auch Figur 3b).

Aus Designgründen und vor allem auch aus technischen Gründen sind jedoch Zierleisten gewünscht, bei denen dieser Radius möglichst klein und gleichmässig sein soll. Aktuell können diese Anforderungen teilweise dadurch erreicht werden, dass die Enden der Zierleisten spanabhebend nachbearbeitet werden. Das Resultat von derartigen Nachbearbeitungen ist in Figur 4 dargestellt. Dies hat jedoch eine Verminderung der Materialstärke zur Folge (vergleiche die Schnittdarstellung in Figur 4a oben links im Einschub). Ausserdem ist der Radius ungleichmässig (vergleiche die Darstellung in Figur 4b), da der Radius nur "gekappt" und nicht wirklich verkleinert wird. Dies ist nicht nur ästhetisch unbefriedigend sondern vor allem auch technisch ungenügend, da eine zu wenig glatte Oberfläche über das gesamte Fahrzeug erzeugt werden kann und grosse Spaltmasse resultieren.

Das hier beschriebene neue Verfahren erlaubt die Herstellung solcher Zierleisten mit kleinen und gleichmässigen Radien (insbesondere zwischen 0 mm und 2,0 mm) ohne die Nachteile einer anschliessenden spanabhebenden Bearbeitung mit sich zu bringen. Ein mit dem vorgeschlagenen Verfahren hergestelltes Teil ist in Figur 5 dargestellt.

Auf evtl. nachfolgende Schritte der Oberflächenbearbeitung (z.B. Polieren, Eloxieren), wie sie derzeit auch bei bestehenden Herstellverfahren angewendet werden, hat das vorgeschlagene Verfahren keinen Einfluss.

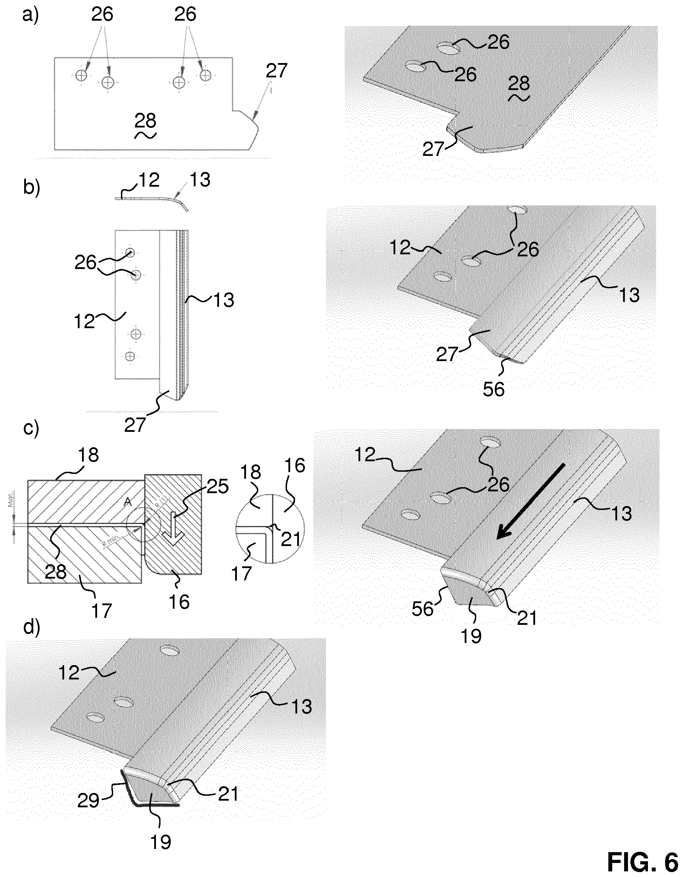

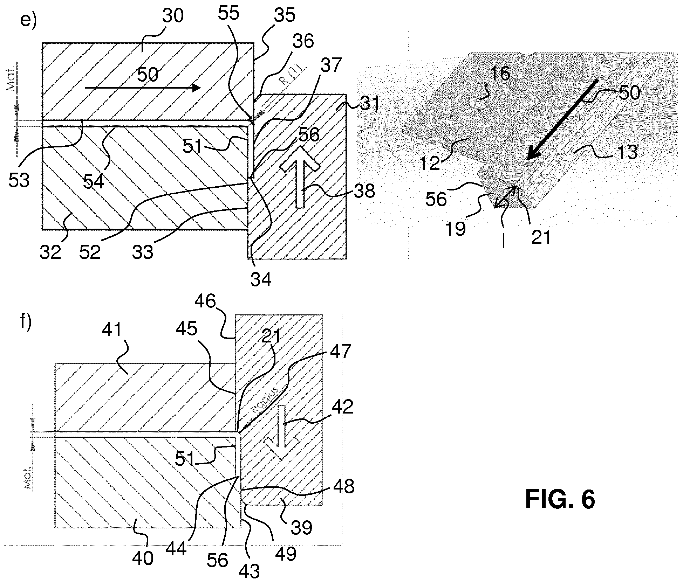

Das vorgeschlagene Verfahren wird in Figur 6 in den einzelnen Schritten zusammengefasst:

Figur 6a zeigt die Herstellung der Platine 28 aus einem flachen Blechstreifen mittels Stanzen oder einer anderen Operation wie beispielsweise Laserschneiden. Hierbei können Bohrungen 26 eingebracht werden, welche in den folgenden Werkzeugstufen zur Positionierung dienen können. Andere Arten der Positionierung sind ebenfalls möglich. Die Kontur 27 im Bereich des Endes der Zierleiste ("Endkappe") kann und wird bevorzugt bereits hier vorgehalten, d.h. ihre Form entspricht nicht der der fertigen Endkappe, sondern ist so ausgelegt, dass sie für das "Rückstauchen" (u.a. bzgl. Materialverteilung und Krafteinleitung) optimal ist. Alternativ hierzu kann diese Kontur 27 auch nach dem Biegeprozess eingebracht werden, was ggf. zu einer höheren Genauigkeit führen kann.

Figur 6b zeigt das Einbringen der Dachbiegung in Längsrichtung der Zierleiste, alternativ kann hier auch der oben diskutierte Knick eingebracht werden, der Schritt kann aber auch weggelassen werden, wenn es sich um eine plane Zierleiste handelt.

Figur 6c zeigt den Schritt des Umbiegens des Endes 27 der Zierleiste 11. Es entsteht eine "Endkappe" deren Aussenradius nicht kleiner als R1 sein kann. Dabei wird die bereits gekrümmte Zierleiste aus dem Schritt gemäss Figur 6b in einem Werkzeug zwischen der Matrizen 17 für den Biegevorgang und dem Niederhalter 18 für den Biegevorgang so geklemmt, dass die vorgehaltene Endkappenkontur 27 aus dem Werkzeug vorsteht. Die Seitenkanten der Elemente 17 und 18 sind um die Materialstärke der Platine versetzt, so dass der von oben an der Seitenkante des Niederhalters 18 entlang geführte Stempel 25 den Bereich 27 umlegt, wobei sich eine abgerundete Kante 21 ausbildet, wie sie in der Vergrösserung im Kreis in der Mitte gut erkannt werden kann. Am Ende resultiert die rechts in einer perspektivischen Ansicht angegebene Struktur, die im wesentlichen jener, die in Figur 3b dargestellt ist, entspricht, und keine genügend scharfe Kante 21 aufweist.

Figur 6d zeigt einen weiteren optionalen Schritt, namentlich kann nach dem in Figur 6c dargestellten Schritt nach dem Biegen ein Beschneiden der Kontur der Endkappe entlang der schematisch angegebenen Linie 29 erfolgen, um für das Zurückstauchen wie in Figur 6e dargestellt, eine optimale Kontur zu erreichen.

Wie in Figur 6e wird nun im entscheidenden Schritt die scharfe Kante erzeugt, indem der ungelegte Bereich gewissermassen in eine definierte Form zurückgestaucht wird. Konkret wird die Endkappe zurückgestaucht, um einen kleinen und gleichmässigen Radius zu erhalten, und zwar unter Verwendung eines Werkzeugs, wie es links dargestellt ist. Die Zierleiste wird zwischen einer Matrizen 30 für den Kantenbildungsvorgang und einer Gegenform 32 für den Kantenbildungsvorgang geklemmt, wobei wiederum die Seitenflächen 35 und 33 so versetzt sind, dass die Endkappe mit ihrer Aussenfläche und die Matrizen 30 mit ihrer Seitenfläche eine Fläche bilden. Ein Stempel 31 wird nun entlang der Richtung 38 zugeführt, wobei der Stempel auf seiner den Elementen 30/32 zugewandten Seitenfläche eine Stufe 34 aufweist. Die Fläche 33 des Stempels 31 gleitet an der Fläche 52 der gegen vom 32, und die Fläche 37 des Stempels 31 gleitet an der Fläche 35 der Matrize 30. So wird der umgelegte Abschnitt nach oben in den Ecken-Hohlraum zwischen den Elementen 30 und 31 gezwungen, und so eine scharfe Kante ausgebildet. Dabei muss insbesondere der Stempel zum Zurückstauchen die entsprechende Kontur aufweisen. Alternativ kann auch in einem nachfolgenden Prozessschritt die gewünschte Endkontur durch eine entsprechende Trennoperation (Stanzen, Lasern, etc.) eingebracht werden.

In den hier gegebenen Figuren ist jeweils dargestellt, wie ungefähr ein rechter Winkel (a gleich 90°) erstellt wird. Es ist aber auch möglich, beispielsweise einen spitzen Winkel auszubilden, dazu müssen die Flächen 33 und 35 in der Darstellung gemäss Figur 6e einfach etwas im Uhrzeigersinn geneigt werden, und der Stempel 31 anschliessend an der entsprechenden Kontaktfläche entlang geführt werden. Vorzugsweise wird für die Ausbildung eines Spitzenwinkels bereits beim in Figur 6c dargestellten Umlegen ein derartiger spitzer Winkel erzeugt, indem auch dort die entsprechenden Seitenflächen geneigt werden.

Falls gewünscht, ist es wie in Figur 6f dargestellt möglich, nach dem Zurückstauchen noch einen Radius an die Endkappe anzuprägen, um den Radius gleichmässiger zu gestalten.

Als Halbzeug für die Herstellung der Zierleisten kann je nach benötigter Geometrie ein Blech oder aber auch ein Strangpressprofil verwendet werden, wie dies in Figur 7 dargestellt ist. Für die Herstellung der Zierleisten aus einem Strangpressprofil sollte die Stadienfolge modifiziert werden, d.h. es sollten ggf. erst bestimme Bereiche (vergleiche Kreise in Figur 7) freigeschnitten werden. Anschliessend erfolgt die Herstellung des Zierleistenendes analog zu den Prozessschritten, wie Sie in den Figuren 6c bis 6e dargestellt sind. Mit dem Verfahren können diese Zierleisten sowohl mit einem stumpfen als auch mit einem spitzen Winkel abgeschlossen werden.

BEZUGSZEICHENLISTE

| | | | |
|---|---|---|---|
| 1 | Automobil | 2' | obere Zierleiste 11 am stationären Bereich |
| 2 | untere Zierleiste 11 am stationären Bereich | 3 | untere Zierleiste 11 an der hinteren Tür |
| 4 | hintere Autotür | 27 | vorgehaltene Endkappenkontur |
| 5 | vordere Autotür | 28 | zugeschnittener Rohling nach Stanzvorgang, Platine |
| 6 | untere Zierleiste 11 an der vorderen Tür | 29 | Konturbeschneidungslinie |
| 7 | Heckklappe | 30 | Matrize für Kantenbildungsvorgang |
| 8 | untere Zierleiste 11 an der Heckklappe | 31 | Stempel für Kantenbildungsvorgang |
| 9 | Glasscheibe | 32 | Gegenform für Kantenbildungsvorgang |
| 10 | Karosserie-Unterkonstruktion | 33 | Kontaktfläche von 31 zu 32 |
| 11 | Zierleiste | 34 | Stufe in 31 |
| 12 | planer Abschnitt von 11 | 35 | Seitenfläche von 30 |
| 13 | umgebogene Abschnitt von 11 | 36 | abgerundete vordere Ecke von 31 |
| 14 | umgeknickter Abschnitt von 11 | 37 | Kontaktfläche von 31 zu 30 |
| 15 | Knickstelle | 38 | Verschiebungsrichtung von 31 |
| 16 | Stempel für den Biegevorgang | 39 | Stempel für Radiusprägung |
| 17 | Matrize für den Biegevorgang | 40 | Matrizen für Radiusprägung |
| 18 | Niederhalter für den Biegevorgang | 41 | Niederhalter für Radiusprägung |
| 19 | umgelegter Bereich von 11 | 42 | Verschiebungsrichtung von 39 |
| 20 | Erstreckungsabschnitt von 11 | 43 | Seitenfläche von 40 |
| 21 | äussere Krümmung | 44 | Absatz in 43 |
| 22 | gefräster Bereich | 45 | Seitenfläche von 41 |
| 23 | Strangprofil | 46 | Kontaktfläche von 39 zu 45 |
| 24 | Randprofilrippe von 23 | 47 | abgerundete Stufe für gewünschten Radius von 46 zu 48 |
| 25 | Verschiebungsrichtung von 16 | 48 | Kontaktfläche von 39 zu 40 |
| 26 | Beschnitt Sucherpins | 49 | abgerundete vordere Ecke von 39 |
| 50 | Hauptverlaufsrichtung von 11 | L | Länge der Zierleiste |
| 51 | Innenfläche von 19 | 1 | maximale Länge des umgelegten Abschnitts 19 |

(fortgesetzt)

| 52 | Seitenfläche von 32 | Mat | Materialstärke Ausgangsmaterial |
| 53 | Klemmfläche von 30 | Rmin | minimal erreichbarer Radius auf der Innenseite |
| 54 | Klemmfläche von 32 | R1 | minimal erreichbarer Radius im Biegevorgang |
| 55 | überstehender Bereich von 53 | $\alpha$ | Winkel zwischen 50 und 19 |
| 56 | Randkante von 19 | | |

**Patentansprüche**

**1.** Verfahren zur Herstellung einer Zierleiste, welche entlang ihrer Verlaufsrichtung (50) eine Länge (L) aufweist, welche wenigstens doppelt so gross ist wie ihre Breite (B) senkrecht zur Verlaufsrichtung (50),
mit einem Erstreckungsabschnitt (20) und an wenigstens einem Ende einem bezüglich Verlaufsrichtung (50) um einen Winkel (a) im Bereich von 60-120° umgelegten Abschnitt (19) mit einer scharfen Kante (21),
umfassend folgende Schritte:

　　i) Vorlegen einer Platine (28) mit einer Materialstärke (Mat) und mit einer vorbereiteten Kontur (27) für die Ausbildung des Abschnitts (19);
　　ii) Umlegen der vorbereiteten Kontur (27) in einem Biegevorgang,
　　wobei die Platine (28) im Bereich des zukünftigen Erstreckungsabschnitts (20) wenigstens im Endbereich zwischen einer Matrize (17) und einem Niederhalter (18) geklemmt wird und die vorbereitete Kontur (27) durch die Verschiebung eines Stempels (16) zu einem umgelegten Abschnitt (19) mit einer Randkante (56) umgebogen wird;
　　iii) Ausbilden einer scharfen Kante (21) des umgelegten Abschnitts (19),

　　**dadurch gekennzeichnet, dass**
　　bei Schritt iii) wenigstens im Endbereich der Erstreckungsabschnitt (20) zwischen einer ersten Klemmfläche (53) einer Matrize (30) für den Kantenbildungsvorgang und einer zweiten Klemmfläche (54) einer Gegenform (32) geklemmt wird,
　　wobei die Innenfläche (51) des umgelegten Abschnitts (19) an einer planen oder gekrümmten Seitenfläche (52) der Gegenform (32) anliegt,
　　wobei eine entsprechende Seitenfläche (35) der Matrize (30) für den Kantenbildungsvorgang in Verlaufsrichtung (50) im Wesentlichen um die Materialstärke (Mat) weiter vorsteht als die Seitenfläche (52) der Gegenform (32),
　　und wobei die erste Klemmfläche (53) der Matrize (30) im überstehenden Bereich (55) um die Materialstärke entlang der Verlaufsrichtung (50) unter Ausbildung einer scharfen Kante zur Seitenfläche (35) fortgesetzt ist,
　　und wobei ein Stempel (31) für den Kantenbildungsvorgang mit einer im Wesentlichen um die Materialstärke (Mat) gestuften, Matrize (30) und Gegenform (32) zugewandten, Seitenfläche (33,37) derart an den Seitenflächen (52, 35) von Gegenform (32) und Matrize (30) entlang geführt wird, dass die Stufe (34) in der Seitenfläche (33, 37) des Stempels (31) an der Randkante (56) angreift und das Material des umgelegten Abschnitts (19) wenigstens teilweise in den Kantenbereich (21) unter Ausbildung einer scharfen Kante verschiebt.

**2.** Verfahren nach Anspruch 1, **dadurch gekennzeichnet, dass** die Randkante (56) zwischen dem Schritt ii) und dem Schritt iii) in einem Stanzvorgang und/oder einem Schneidvorgang zugeschnitten wird oder spanabhebend bearbeitet wird.

**3.** Verfahren nach einem der vorhergehenden Ansprüche, **dadurch gekennzeichnet, dass** in Schritt i) eine Platine (28) mit einer Materialstärke (Mat) und mit einer vorgehaltenen Endkappenkontur (27) vorgelegt wird und/oder dass nach dem Schritt iii) in einem Stanzvorgang und/oder einem Schneidvorgang und/oder einer spanabhebenden Operation die Endkappenkontur erzeugt wird.

**4.** Verfahren nach einem der vorhergehenden Ansprüche, **dadurch gekennzeichnet, dass** die im Schritt i) vorgelegte Platine in einem Stanzvorgang und/oder Schneidvorgang, einschliesslich Laserschneiden, aus einem flachen Blechstreifen hergestellt wird, und vorzugsweise Bohrungen (26) vorgesehen werden.

**5.** Verfahren nach Anspruch 4, dass vor dem Schritt i) die Platine zusätzlich um eine im Wesentlichen parallel zur Verlaufsrichtung (50) verlaufende Achse abgeknickt und/oder gekrümmt wird unter Ausbildung eines umgebogenen Abschnittes (13) oder eines umgeknickten Abschnittes (14).

**6.** Verfahren nach einem der vorhergehenden Ansprüche 1-3, **dadurch gekennzeichnet, dass** die in Schritt i) vorgelegte Platine aus einem Strangprofil hergestellt wird, wobei vorzugsweise gegebenenfalls vorhandene Randprofilrippen (24) im Angrenzungsbereich an den umgelegten Abschnitt (19) vorgängig ausgeschnitten werden.

**7.** Verfahren nach einem der vorhergehenden Ansprüche, **dadurch gekennzeichnet, dass** im Schritt ii) der umgelegten Abschnitt (19) um eine Achse senkrecht zur Verlaufsrichtung (50) umgelegt wird.

**8.** Verfahren nach einem der vorhergehenden Ansprüche, **dadurch gekennzeichnet, dass** anschliessend an den Schritt iii) die Zierleiste einem weiteren Bearbeitungsschritt unterzogen wird, einschliesslich Zuschnitt, Oberflächenbehandlung, einschliesslich Oberflächenbeschichtung, Polieren, Eloxieren, Honen, spanabhebende Oberflächenbehandlung.

**9.** Verfahren nach einem der vorhergehenden Ansprüche, **dadurch gekennzeichnet, dass** anschliessend an den Schritt iii) die scharfe Kante (21) der Zierleiste in einem weiteren Prägungsschritt präzisiert wird, indem der Erstreckungsabschnitt (20) der Zierleiste (11) wenigstens im Endbereich zwischen einer ersten Klemmfläche einer Matrize (40) für die Radiusprägung und einer zweiten Klemmfläche eines Niederhalters (41) für die Radiusprägung geklemmt wird, die Randkante (56) des umgelegten Abschnitts in einer Stufe (44) einer Seitenfläche (43) der Matrize (40) für die Radiusprägung abgestützt wird, und von der Seite des Niederhalters (41) ein Stempel (39) für die Radiusprägung mit einer abgerundeten Stufe (47) für den gewünschten Radius für die scharfe Kante (21) umformend auf die scharfe Kante (21) geführt wird.

**10.** Verfahren nach einem der vorhergehenden Ansprüche, **dadurch gekennzeichnet, dass** die Zierleiste aus Metall besteht, bevorzugt aus Aluminium oder einer Aluminiumlegierung, aus Stahl, vorzugsweise rostfreiem Stahl, Messing, Silber, Titan, Kupfer, oder eine Legierung dieser Materialien.

**11.** Verfahren nach einem der vorhergehenden Ansprüche, **dadurch gekennzeichnet, dass** die Zierleiste eine Materialstärke (Mat) im Bereich von 0.5-2.5 mm, vorzugsweise im Bereich von 0.8-2 mm, insbesondere im Bereich von 1-1.6 mm aufweist.

**12.** Verfahren nach einem der vorhergehenden Ansprüche, **dadurch gekennzeichnet, dass** die scharfe Kante (21) einen Radius von höchstens 2.0 mm aufweist, vorzugsweise im Bereich von 0.1-2.0 mm, insbesondere vorzugsweise im Bereich von 0.2-1 mm,
und/oder dass die Zierleiste eine Materialstärke (Mat) aufweist, vorzugsweise im Bereich von 0.5-2.5 mm, insbesondere vorzugsweise im Bereich von 0.8-2 mm, oder im Bereich von 1-1.6 mm, und die scharfe Kante (21) einen Radius von 0.1 - 0.4 mal Ausgangsmaterialstärke (Mat) aufweist, vorzugsweise 0.2-0.3 mal Ausgangsmaterialstärke (Mat).

**13.** Verfahren nach einem der vorhergehenden Ansprüche, **dadurch gekennzeichnet, dass** die Länge (L) im Bereich von 5 - 300 cm oder 10-150 cm, vorzugsweise im Bereich von 20-100 cm liegt, und/oder die Breite (B) im Bereich von 0.4-12 cm, vorzugsweise im Bereich von 1-5 oder 1-3 cm,
und/oder **dadurch gekennzeichnet, dass** die Länge (1) des umgelegten Abschnitts (19) an der längsten Stelle im Bereich von 0.3-5 cm, vorzugsweise im Bereich von 0.5-3 cm liegt.

**Claims**

**1.** A method for producing a trim strip which, in the extent direction (50) thereof, has a length (L) which is at least twice as large as the width (B) thereof perpendicularly to the extent direction (50),
having an extension portion (20) and at least at one end a portion (19) which is turned over with respect to the extent direction (50) about an angle ($\alpha$) in the range from 60-120° with a sharp edge (21)
comprising the following steps of:

> i) presenting a plate (28) with a material thickness (Mat) and with a prepared contour (27) for the formation of the portion (19);
> ii) turning over the prepared contour (27) in a bending operation,
> wherein the plate (28) in the region of the future extension portion (20) at least in the end region is clamped between a die (17) and a holding-down member (18) and the prepared contour (27) is bent over by means of the displacement of a stamp (16) to form a turned-over portion (19) with a peripheral edge (56);

iii) forming a sharp edge (21) of the turned-over portion (19),

**characterized in that** in step iii) at least in the end region of the extension portion (20) a counter-mold (32) is clamped between a first clamping face (53) of a die (30) for the edge formation operation and a second clamping face (54),
wherein the inner face (51) of the turned-over portion (19) is in abutment with a planar or curved side face (52) of the counter-mold (32),
wherein a corresponding side face (35) of the die (30) for the edge formation operation protrudes further in the extent direction (50) substantially by the material thickness (Mat) than the side face (52) of the counter-mold (32),
and wherein the first clamping face (53) of the die (30) is continued in the overhanging region (55) by the material thickness in the extent direction (50), with a sharp edge being formed with respect to the side face (35),
and wherein a stamp (31) for the edge formation operation is guided with a side face (33, 37) which is stepped substantially by the material thickness (Mat) and which faces the die (30) and counter-mold (32) in such a manner along the side faces (52, 35) of the counter-mold (32) and die (30) that the step (34) in the side face (33, 37) of the stamp (31) engages on the peripheral edge (56) and displaces the material of the turned-over portion (19) at least partially in the edge region (21) with a sharp edge being formed.

2. The method as claimed in claim 1, **characterized in that** the peripheral edge (56) is cut between the step ii) and the step iii) in a punching operation and/or a cutting operation or is processed in a cutting manner.

3. The method as claimed in one of the preceding claims, **characterized in that** in step i) a plate (28) with a material thickness (Mat) and with a reserved end cap contour (27) is presented and/or **in that** after step iii) in a punching operation and/or a cutting operation and/or a machining operation the end cap contour is produced.

4. The method as claimed in one of the preceding claims, **characterized in that** the plate which is presented in step i) is produced in a punching operation and/or cutting operation, including laser cutting, from a flat sheet metal strip, and preferably holes (26) are provided.

5. The method as claimed in claim 4, **characterized in that** before step i) the plate is additionally folded and/or curved about an axis which extends substantially parallel with the extent direction (50) with a bent-over portion (13) or a folded portion (14) being formed.

6. The method as claimed in one of the preceding claims 1 to 3, **characterized in that** the plate presented in step i) is produced from an extruded profile, wherein preferably any edge profile ribs (24) which may be present in the region adjacent to the turned-over portion (19) are cut out in advance.

7. The method as claimed in one of the preceding claims, **characterized in that** in step ii) the turned-over portion (19) is turned over about an axis perpendicular to the extent direction (50).

8. The method as claimed in one of the preceding claims, **characterized in that**, following step iii), the trim strip is subjected to another processing step including cutting, surface treatment, including surface coating, polishing, anodization, honing, cutting surface treatment.

9. The method as claimed in one of the preceding claims, **characterized in that**, following step iii), the sharp edge (21) of the trim strip is further refined in a subsequent embossing step by the extension portion (20) of the trim strip (11) at least in the end region being clamped between a first clamping face of a die (40) for the radius embossing and a second clamping face of a holding-down member (41) for the radius embossing, the peripheral edge of the turned-over portion is supported in a step (44) of a side face (43) of the die (40) for the radius embossing and from the side of the holding-down member (41) a stamp (39) for the radius embossing with a rounded step (47) for the desired radius for the sharp edge (21) is guided in a shaping manner on the sharp edge (21).

10. The method as claimed in one of the preceding claims, **characterized in that** the trim strip consists of metal, preferably aluminum or an aluminum alloy, of steel, preferably stainless steel, brass, silver, titanium, copper, or an alloy of these materials.

11. The method as claimed in one of the preceding claims, **characterized in that** the trim strip has a material thickness (Mat) in the range from 0.5-2.5 mm, preferably in the range from 0.8-2 mm, in particular in the range from 1-1.6 mm.

**12.** The method as claimed in one of the preceding claims, **characterized in that** the sharp edge (21) has a radius of at most 2.0 mm, preferably in the range from 0.1-2.0 mm, particularly preferably in the range from 0.2 - 1 mm, and/or **in that** the trim strip has a material thickness (Mat), preferably in the range from 0.5-2.5 mm, particularly preferably in the range from 0.8-2 mm, or in the range from 1-1.6 mm, and the sharp edge (21) has a radius of 0.1 - 0.4 times the starting material thickness Mat), preferably 0.2-0.3 times the starting material thickness (Mat).

**13.** The method as claimed in one of the preceding claims, **characterized in that** the length (L) is in the range from 5 - 300 cm or 10-150 cm, preferably in the range from 20-100 cm, and/or the width (B) is in the range from 0.4-12 cm, preferably in the range from 1-5 or 1-3 cm, and/or **characterized in that** the length (1) of the turned-over portion (19) at the longest location is in the range from 0.3-5 cm, preferably in the range from 0.5-3 cm.

**Revendications**

**1.** Procédé de fabrication d'une bande ornementale qui, le long de sa direction d'extension (50), a une longueur (L) au moins deux fois plus grande que sa largeur (B) perpendiculaire à la direction d'extension (50), avec une section d'extension (20) et, à au moins une extrémité, une section (19) qui est repliée selon un angle (a) compris entre 60 et 120° par rapport à la direction d'extension (50) et qui présente une arête vive (21). comprenant les étapes suivantes :

i) Présenter une pièce brute (28) avec une épaisseur de matériau (Mat) et avec un contour préparé (27) pour former la section (19) ;
ii) le pliage du contour préparé (27) dans une opération de pliage,
dans lequel l'ébauche (28) est serrée dans la zone de la future section d'extension (20) au moins dans la zone d'extrémité entre une matrice (17) et un dispositif de maintien en position basse (18) et le contour préparé (27) est replié par le déplacement d'un poinçon (16) pour former une section pliée (19) avec un bord marginal (56) ;
iii) formant une arête vive (21) de la partie pliée (19),

**caractérisé en ce que**
à l'étape iii), au moins dans la zone d'extrémité, la partie d'extension (20) est serrée entre une première surface de serrage (53) d'une matrice (30) pour l'opération de façonnage des bords et une deuxième surface de serrage (54) d'une contre-matrice (32),
dans lequel la surface intérieure (51) de la section pliée (19) est en contact avec une surface latérale (52) plane ou courbe du contre-moule (32),
dans lequel une surface latérale correspondante (35) de la matrice (30) pour le processus de formation des bords dépasse dans le sens de la marche (50) sensiblement de l'épaisseur du matériau (Mat) plus que la surface latérale (52) de la contre-matrice (32),
et dans lequel la première surface de serrage (53) de la matrice (30) est prolongée dans la zone en saillie (55) par l'épaisseur du matériau le long de la direction de déplacement (50), formant une arête vive vers la surface latérale (35), et dans lequel un poinçon (31) pour le processus de formation des bords, avec une surface latérale (33, 37) tournée vers la matrice (30) et la contre-matrice (32) et étagée sensiblement par l'épaisseur de matériau (Mat), est guidé le long des surfaces latérales (52, 35) de la contre-matrice (32) et de la matrice (30) de cette manière, **en ce que** le gradin (34) de la surface latérale (33, 37) du timbre (31) s'engage dans le bord (56) et déplace le matériau de la partie repliée (19) au moins partiellement dans la zone du bord (21), en formant une arête vive.

**2.** Procédé selon la revendication 1, **caractérisé en ce que** le bord marginal (56) entre l'étape ii) et l'étape iii) est découpé à la taille ou usiné dans une opération de poinçonnage et/ou de coupe.

**3.** Procédé selon l'une des revendications précédentes, **caractérisé en ce qu'**à l'étape i) une ébauche (28) avec une épaisseur de matériau (Mat) et avec un contour de capuchon d'extrémité (27) conservé est présentée et/ou qu'après l'étape iii) le contour de capuchon d'extrémité est produit dans une opération de poinçonnage et/ou une opération de coupe et/ou une opération d'usinage.

**4.** Procédé selon l'une des revendications précédentes, **caractérisé en ce que** la pièce brute présenté à l'étape i) est produit à partir d'une bande de tôle plate dans une opération de poinçonnage et/ou de découpage, y compris le découpage au laser, et de préférence des trous (26) sont prévus.

**5.** Procédé selon la revendication 4, dans lequel, avant l'étape i), la pièce brute est en outre plié et/ou courbé autour d'un axe s'étendant sensiblement parallèlement à la direction de déplacement (50), formant une partie pliée (13) ou une partie repliée (14).

**6.** Procédé selon l'une des revendications 1-3 précédentes, **caractérisé en ce que** l'ébauche présentée à l'étape i) est produite à partir d'un profilé extrudé, dans lequel de préférence les nervures (24) du profilé de bord éventuellement présentes sont découpées au préalable dans la zone adjacente à la section repliée (19).

**7.** Méthode selon l'une des revendications précédentes, **caractérisée en ce qu'**à l'étape ii), la section repliée (19) est repliée autour d'un axe perpendiculaire à la direction de déplacement (50).

**8.** procédé selon l'une des revendications précédentes, **caractérisé en ce qu'**à la suite de l'étape iii), la bande décorative est soumise à une autre étape de traitement, comprenant la découpe à la taille, le traitement de surface, y compris le revêtement de surface, le polissage, l'anodisation, le rodage, l'usinage du traitement de surface.

**9.** Procédé selon l'une des revendications précédentes, **caractérisé en ce qu'**à la suite de l'étape iii), l'arête vive (21) de la bande décorative est affinée dans une autre étape de gaufrage en serrant la partie de prolongement (20) de la bande décorative (11) au moins dans la zone d'extrémité entre une première surface de serrage d'une matrice (40) pour le gaufrage de rayon et une deuxième surface de serrage d'un serre-flan (41) pour le gaufrage de rayon, le bord marginal (56) de la section repliée est soutenu dans un gradin (44) d'une surface latérale (43) de la matrice (40) pour le gaufrage de rayon, et un poinçon (39) pour le gaufrage de rayon avec un gradin arrondi (47) pour le rayon souhaité pour l'arête vive (21) est guidé depuis le côté du serre-flan (41) sur l'arête vive (21) de manière déformante.

**10.** Procédé selon l'une des revendications précédentes, **caractérisé en ce que** la bande décorative est en métal, de préférence en aluminium ou en un alliage d'aluminium, en acier, de préférence en acier inoxydable, en laiton, en argent, en titane, en cuivre ou en un alliage de ces matériaux.

**11.** Méthode selon l'une des revendications précédentes, **caractérisée en ce que** la bande décorative a une épaisseur de matériau (Mat) dans la gamme de 0,5-2,5 mm, de préférence dans la gamme de 0,8-2 mm, en particulier dans la gamme de 1-1,6 mm.

**12.** Méthode selon l'une des revendications précédentes, **caractérisée en ce que** l'arête vive (21) a un rayon d'au plus 2,0 mm, de préférence dans la plage de 0,1-2,0 mm, en particulier de préférence dans la plage de 0,2-1 mm, et/ou **en ce que** la bande de garniture a une épaisseur de matériau (Mat), de préférence comprise entre 0,5 et 2,5 mm, en particulier de préférence entre 0,8 et 2 mm, ou entre 1 et 1,6 mm, et l'arête vive (21) a un rayon de 0,1 à 0,4 fois l'épaisseur initiale du matériau (Mat), de préférence entre 0,2 et 0,3 fois l'épaisseur initiale du matériau (Mat).

**13.** Méthode selon l'une des revendications précédentes, **caractérisée en ce que** la longueur (L) est comprise entre 5 et 300 cm ou entre 10 et 150 cm, de préférence entre 20 et 100 cm, et/ou la largeur (B) est comprise entre 0,4 et 12 cm, de préférence entre 1 et 5 ou entre 1 et 3 cm, et/ou **caractérisé en ce que** la longueur (1) de la section pliée (19) au point le plus long est comprise entre 0,3 et 5 cm, de préférence entre 0,5 et 3 cm.

FIG. 1

FIG. 2

FIG. 3

FIG. 4

**FIG. 5**

**FIG. 7**

FIG. 6

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014108726 A